# EUROPEAN PATENT SPECIFICATION

(11) **EP 3 076 790 B1**
(45) Date of publication and mention of the grant of the patent: **24.04.2019**
(21) Application number: 14867622.4
(22) Date of filing: 04.12.2014
(51) Int. Cl.: A01N 47/28, A01N 37/28, A01N 25/00, A01P 21/00, A01N 47/34

(54) **METHOD FOR APPLYING DIFORMYLUREA TO CORN**
VERFAHREN ZUM AUFBRINGEN VON DIFORMYLHARNSTOFF AUF MAIS
PROCÉDÉ D'APPLICATION DE DIFORMYLURÉE SUR DE MAÏS

(30) Priority: 04.12.2013 US 201361911909 P
(43) Date of publication of application: 12.10.2016
(73) Proprietor: Stoller Enterprises, Inc., Houston, TX 77043 (US)
(72) Inventor: STOLLER, Jerry, Houston, Texas 77024 (US); LIPTAY, Albert, Houston, Texas 77041 (US)
(74) Representative: FRKelly
(86) International application number: PCT/US2014/068619
(87) International publication number: WO 2015/085090

(56) References cited:
- EP-B1- 0 955 797
- US-A- 6 040 273
- US-A1- 2004 106 522
- US-A1- 2011 300 110
- US-A1- 2012 255 475
- US-A1- 2013 072 384
- US-A1- 2013 116 119
- US-A1- 2013 232 646
- Stoller Enterprises, Inc.: "Bio-Forge-N,N'-Doformyl urea", , 1 November 2009 (2009-11-01), XP055204898, Retrieved from the Internet: URL:http://www.stollerme.com/files/bio-for ge.pdf [retrieved on 2009-11]

## Description

### BACKGROUND OF THE INVENTION

### (1) Field Of the Invention

This invention relates to a new method for preventing drowning of corn plants when flooded by application of diformylurea (DFU).

### (2) Description of Prior Art

Previous U.S. patents (U.S. 6,040,273, U.S. 6,448,440, U.S. 6,710,085) to Dean have described the beneficial effects of DFU applied to crop plants to enhance the rate of seed germination and seedling growth of a number of crop plant variables such as shoot and root fresh weights.
EP0955797 teaches the use of DFU for enhancing growth of a plant.
Stoller Enterprises, Inc. (Bio-Forge-N,N'-Doformyl urea", (20091101), disclosed applying DFU to a crop under stress.
US6040273 discloses the use of DFU to improve seed vigour.
US2004/106522 teaches that DFU mimics plant growth hormones and/or regulators.
US2013/0116119 teaches applying DFU to seeds prior to planting, to soil or to foliage.

### (3) Identification of Objects of the Invention.

An important object of this invention is to apply DFU to corn crop plants subject to flooding of the fields in which they are planted to prevent drowning of the plants in flooded fields.

### SUMMARY OF THE INVENTION

The invention is a method for preventing drowning of corn crop plants when flooded by excessive rain by applying diformylurea DFU in an open soil furrow at the time of crop seed sowing.

The applying of the DFU to the crop plants flooded by the excessive rain prevents the drowning of the crop plants.

Typically DFU sprayed at a dose of 1.169 L/ha (1 pint per acre) to 1.75 L/ha (1 1/2 pints per acre) over the seed and onto the soil of the open furrow before closure of the open furrow.

Pressure may be applied to said closed furrow.

### BRIEF DESCRIPTION OF THE DRAWINGS

Figure 1 is a photograph illustrating root structure of two corn plants, one treated (on right) with DFU, the other untreated (on left);
Figure 2 is a photograph of a root structure showing dry soil around the roots of a corn plant that has not been treated with DFU;
Figure 3 is a photograph of a root structure showing moist soil around the roots of a corn plant (grown under the same conditions as that of Figure 2) treated with DFU;
Figure 4 is a graph which illustrates increase in guttation of DFU corn seedlings as a function of DFU application;
Figure 5 is a photograph of a field of corn plants that has been flooded by excessive rain;
Figure 6 is a photograph of the field of Figure 5 after water has partially receded, but showing corn plants that had been treated with DFU alive in the water;
Figure 7 is a close-up photograph showing a DFU treated corn plant of Figure 6;
Figure 8 is a photograph of a DFU treated corn plant that survived the flood of Figure 5;
Figure 9 is a photograph of corn plants that were not treated with DFU after flooding has receded;
Figure 10 is a close-up photograph of non-DFU treated corn plants after having experienced a flooding condition;

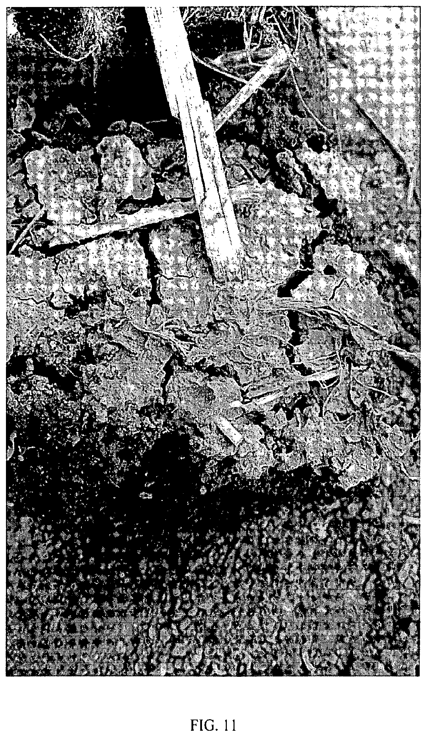

Figure 11 is a close-up photograph of a dead corn plant (that was not treated with DFU) after flooding;
Figure 12 is another photograph of corn plants that were treated with DFU that survived flooding;
Figure 13 is a photograph of a corn cob of a plant that survived the flood of Figure 5;
Figure 14 is a graph showing the effect of DFU treatment on corn plants thereby requiring less water use for growing; and
Figure 15 is a graph illustrating enhanced tissue development in DFU treated corn plants (enhanced volumetric capacity of the stem). The graph further illustrates enhanced efficiency and volume flow of internal water and "growth" solutes.

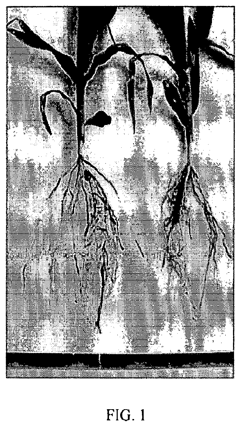

Figures 1-4, 14 and 15 are not according to the invention.

### DESCRIPTION OF THE INVENTION

It is disclosed therein that application of DFU to growing crop plants results in a large increase in the functional capacity of the crop plant root system because of selective root tissue synthesis and development of fine small feeder roots that operate to take up water and minerals from the soil environment. Treatment of crop plant tissue described herein includes exogenous treatment of the crop plants with a DFU solution at a rate of between 0.1169 to 11.69 L/ha (0.1 to 10 pints/acre) over the crop growth stages or as a preferred rate of 0.584 to 1.754 L/ha (0.5 to 1.5 pints per acre). Preferably, the concentration of the DFU which is applied at the above rates is from stock solutions of 0.001 Molar to 1.0 Molar with a preferred Molarity of 0.001 Molar to 0.05 Molar. Figure 1 is a photograph of two plants: the plant on the left had no treatment with DFU; the plant on the right hand side was treated with DFU. The treated plant on the right hand side has a significantly greater fine small feeder root system development than does the untreated plant on the left hand side. The treated plant on the right hand side of Figure 1 is in contrast to the thicker deeper roots of the plant on the left hand side which has fewer "root tips" for water and nutrient uptake from the soil. The DFU treated plant on the right has smaller feeder roots for water, mineral, and nutrient uptake from the roots to the shoots.

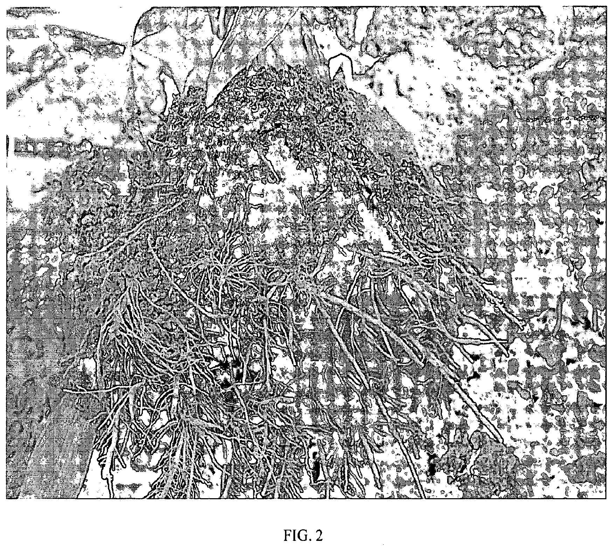

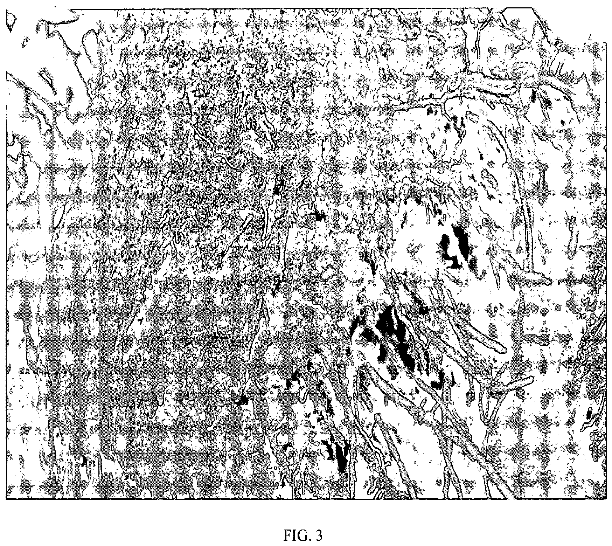

It is also disclosed therein that applying DFU to crop plants causes enhancement of crop plant cellular water and soil moisture around the feeder roots. Compare the feeder root system of Figure 2 of a plant that has had no DFU applied to it with the feeder root system of Figure 3 of a plant that has DFU applied to it. Much more moist soil can be seen around the root system of Figure 3.

The method of applying DFU to crop plants, which has been covered by natural rain or other types of flooding is a distinctive enhanced feature of DFU treatment of crop plants to ameliorate damaging effects of field soil excessive moisture such as flooding. The most efficacious method of DFU treatment for this feature is that of an "in furrow" application into the open soil furrow at time of crop seed sowing with a spray of DFU at a dose of 1.169 to 1.75 L/ha (one to one and a half pints per acre) over the seed and unto the soil of the open furrow before closure of the open furrow and application of pressure to the closed furrow for optimal soil contact with the seed.

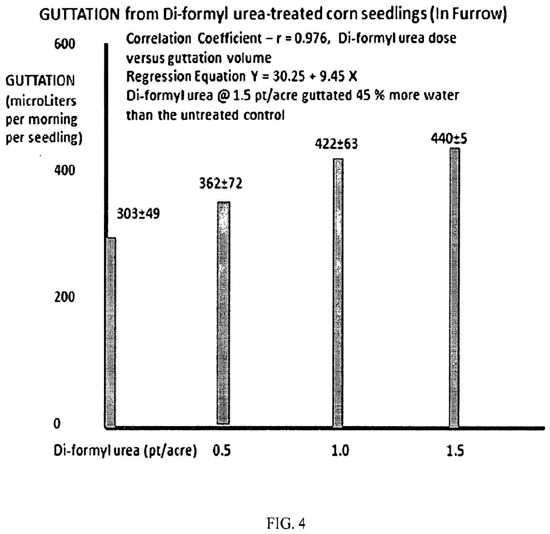

It is also disclosed therein that treatment of crop plants such as corn increases guttation of the water on plant leaves. Figure 4 illustrates the results of increased guttation on seedling leaves as a function of DFU amounts.

It has been discovered that applying DFU to corn crop plants prevents drowning of the plants when a corn crop field is flooded by excessive rain or other types of flooding. The method of DFU treatment to prevent drowning is that of an in furrow application of DFU open soil furrow at the time of corn crop seed sowing. DFU is preferably sprayed at a dose of 1.169 L/ha (1pint per acre) to 1.753 L/ha (1 ½ pints per acre) over the seed and onto the soil of the open furrow before closure of the open furrow and application of pressure to the closed furrow for optional soil contact with the seed.

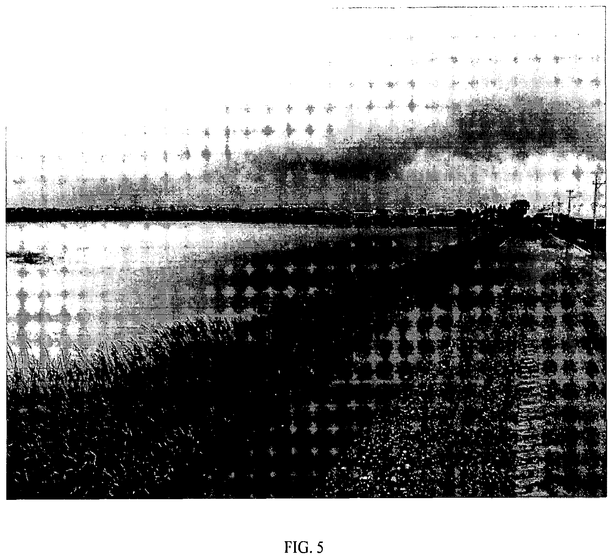

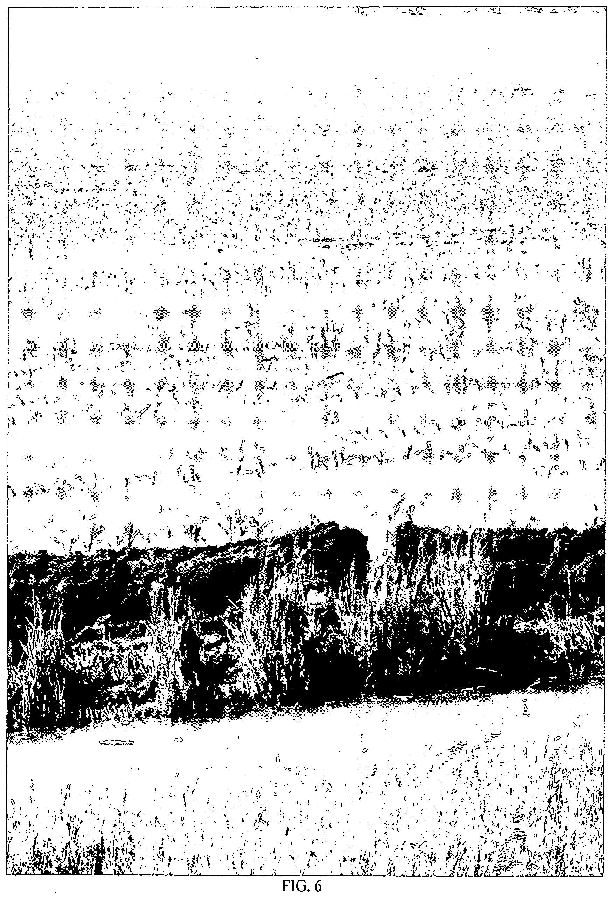

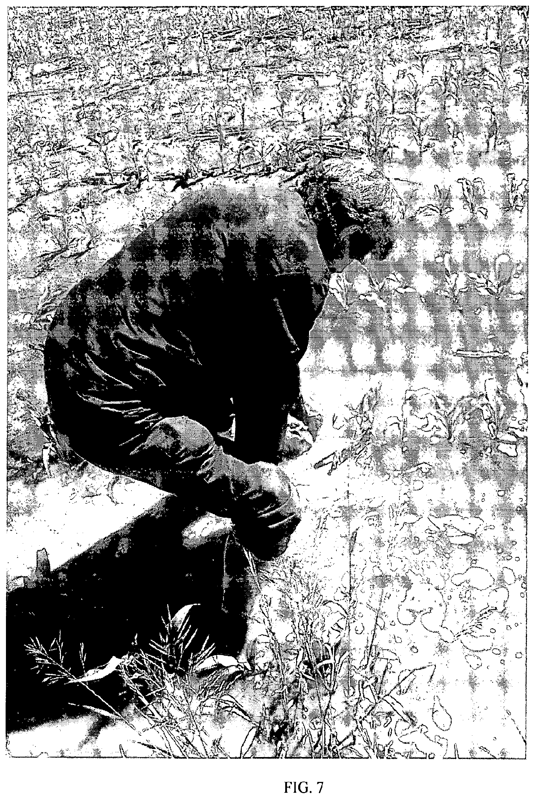

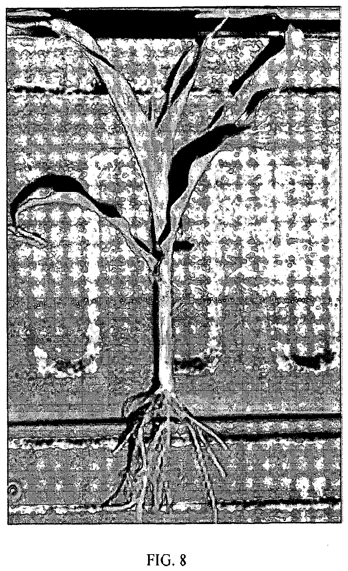

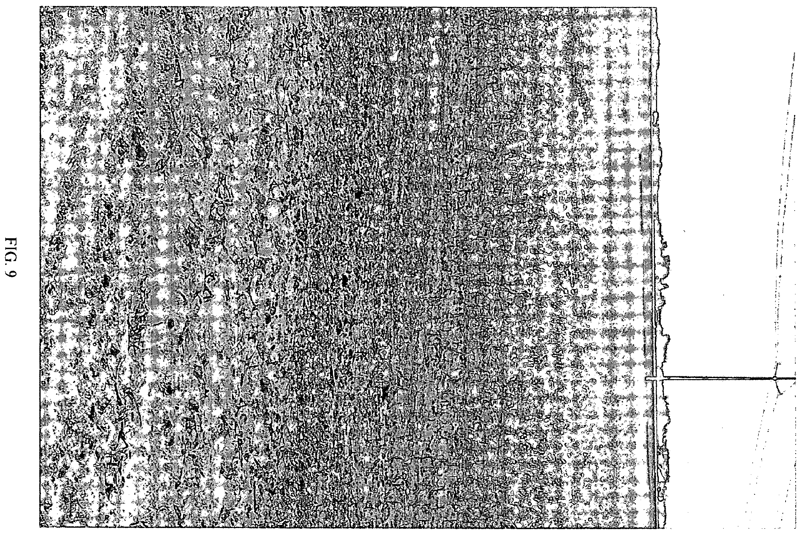

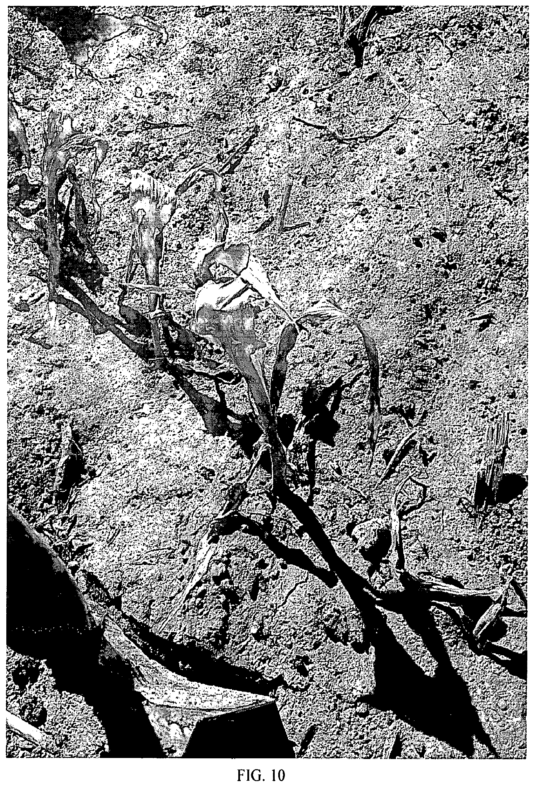

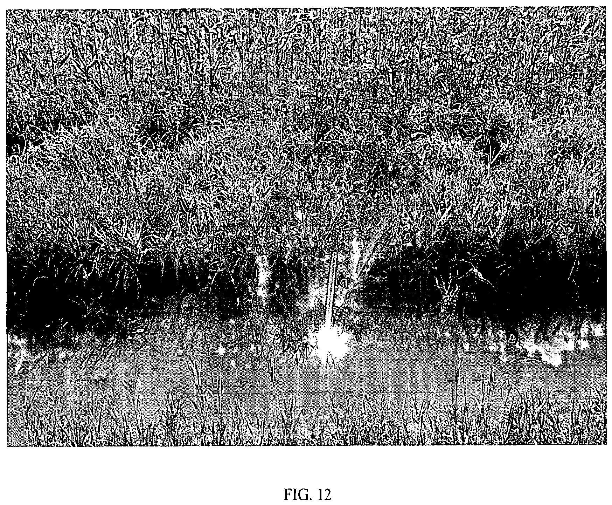

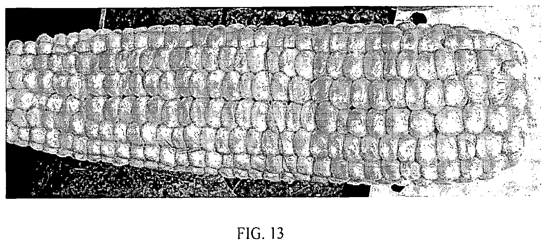

Figure 5 is a photograph of a corn field completely flooded by excessive rain. Figures 6 and 7 show corn plants treated with DFU after the excessive water has retreated somewhat. The corn plants are seen to be growing. Figure 8 is a photograph of a corn plant that is seen to have survived the flood. Figure 9 is a photograph of a corn field which has not been treated with DFU, but after flooding, has been almost completely killed because of the water. Figure 10 is a close-up photo of corn that has been killed because of flooding. Figure 1 1 is a photo of the remains of a corn plant that has been killed by the flooding. Figure 12 is a photo of the corn plants treated with DFU with the plants growing in excessive moisture. Figure 13 is a photo of a corn cob of a corn plant that was treated with DFU and flooded as in Figures 5, 6 and 7.

It is also disclosed therein that DFU treatment of corn plants increases the inter-nodal volume of corn plants. Table 1 below confirms that discovery where internodal stalk volumes of untreated corn crop plants was calculated to be 311.71 (cc) ml per plant whereas the inter-nodal stalk volumes of the DFU-treated corn plant was 355.47, an increase of 14% over the control plant.

**Table 1**

| Growth Stage | Internodal Volume ((cc) ml ) | Internodal Volume ((cc) ml ) |
|---|---|---|
| | Untreated corn plant | DFU-Treated corn plant |
| V1 | 26.93 | 33.49 |
| V2 | 41.20 | 45.02 |
| V3 | 46.90 | 55.76 |
| V4 | 52.06 | 59.14 |
| V5 | 48.38 | 54.34 |
| V6 | 42.21 | 47.79 |
| V7 | 31.26 | 35.02 |
| V8 | 22.77 | 24.90 |

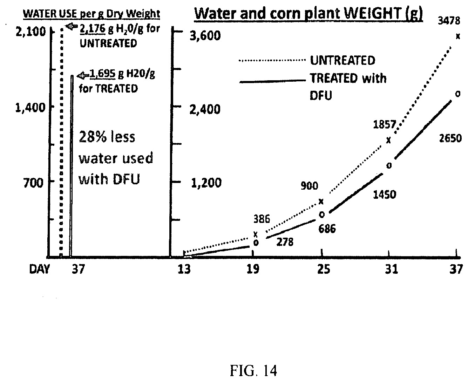

It is also disclosed therein that crops treated with DFU require less water for growing. See the results illustrated in Figure 14. In two barrels that were sealed at the top, a precise amount of growing medium was added with appropriate fertilizer and a precise amount of water. One of the barrels had fertilizer only while the second had a 0.0015% solution of DFU. Seven corn seedlings were germinated and grown in the growing medium in each of the barrels for a period of 37 days. At 37 days the fresh weight and dry weights of corn plants were determined. The graph on the right side of Figure 4 depicts the combined weight of the water and the plants growing out of the barrels. The graph on the left depicts the average amount of water needed to grow the treated vs the untreated corn, indicating a twenty eight percent savings with the DFU-treated plants contrasted to the untreated plants. The two barrels were constantly weighed electronically.

An increase in crop production as a result of DFU treatment see Table 2 below. Untreated soybean plant yields were 3.53 t/ha (52.5 bushels per acre). The DFU treated soybean plants yielded 7.46 t/ha (111 bushels per acre). This represents an increase in water use efficiency of 111 percent.

**Table 2**

| Treatment | Average Yield t/ha (bu per acre) | Standard Deviation | T test vs control P=% | Rep 1 Yield | Rep2 Yield | Rep3 Yield | Rep4 Yield |
|---|---|---|---|---|---|---|---|
| Control Untreated | 3.53 (52.50) | 0.11 (1.68) | | 4.04 (60) | 3.63 (54) | 3.63 (54) | 3.5 (52) |
| Seed treatment (2 oz) 59mL DFU/(cwt) 45 kg of seed | 7.46 (111) | 0.08 (1.22) | 0.0000016 | 7.33 (109) | 7.53 (112) | 7.46 (111) | 7.53 (112) |

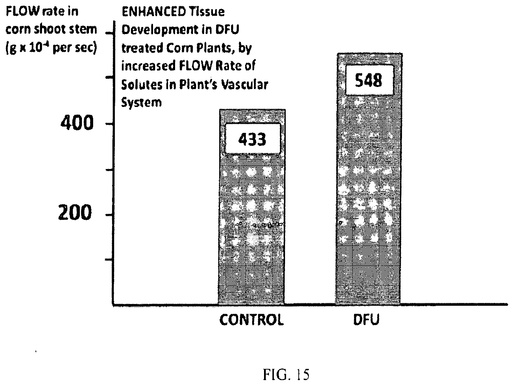

Enhanced tissue development in DFU treated corn plants is illustrated in Figure 15. It is disclosed therein that combining DFU and nitrogen fertilizer to the soil of a corn crop significantly enhances yield of the corn crop over simply using nitrogen fertilizer alone.

It is also disclosed therein that applying DFU to crop plants facilitates the efficiency of pesticides or herbicides or fungicides to enhance crop plant growth and crop productivity while not diminishing or suppressing the function of the pesticides, herbicides or fungicides.

It is disclosed that greatly enhanced water use efficiency of up to 28% is achieved when crop plants have been treated with DFU.

Table 3 below illustrates the increased performance of herbicides and fungicides for crop plants by addition of DFU to the crops. Quadris™ fungicide (product of Syngenta Crop Protection, Inc.) was applied at the R1 stage of growth and gave a yield increase of 1.01 t/ha (15 bushels per acre). DFU by itself increased soybean yields by 2.69 t/ha (40 bushels per acre). DFU and Quadris applied together increased the yields by 1.41 metric tons (52 bushels).

**Table 3**

| Treatment | Soybean Yield t/ha (Bu/acre) | Standard Deviation | T test vs Control P value | | Rep1 | Rep 2 | Rep 3 | Rep 4 |
|---|---|---|---|---|---|---|---|---|
| Control | 3.7 (55.0) | 0.23 (3.35) | | | 3.56 (53.0) | 3.85 (57.2) | 3.4 (50.6) | 3.97 (59.1) |
| DFU @ 1.4 L/ha (1 pt/acre) | 6.4 (95.1) | 0.3 (4.49) | (1.47E-05) | | 6.23 (92.7) | 6.44 (95.8) | 6.05 (89.9) | 6.86 (102) |
| Quadris @ recommended rate | 4.73 (70.4) | 0.42 (6.25) | (0.0016) | | 4.4 (65.40) | 4.9 (72.9) | 4.3 (63.9) | 5.35 (79.50) |
| DFU together with Quadris at above rates | 7.2 (107.0) | 0.23 (3.39) | (0.00044) | | 7.33 (109.0) | 7.13 (106.0) | 7.46 (111) | 6.86 (102) |

Table 4 below illustrates mineral use efficiency achieved with DFU applied to crop 5 plants. A total of 81.65 kg (180 lb) of nitrogen fertilizer/acre, with 1/2 of nitrogen applied at V4 (forth leaf) and 1/2 at V7 (seventh leaf) as a side dress (7.62 cm (3 inches) to the side of the plant and 7.62 (3 inches) below the soil surface). The field corn cultivar DKC 66-96 was planted on 11 Feb 2013 (2/1 1/13) and harvested on 12 July 2013 (7/12/13). The harvested yield results reflect a 60.7% increase in efficiency of use of the available nitrogen mineral 10 fertilizer by the DFU treatment of the seed.

**Table 4**

| Treatment | Average Yield t/ha (bu per acre) | Standard Deviation | T test vs control p=% | Rep1 Yield | Rep 2 Yield | Rep 3 Yield | Rep 4 Yield |
|---|---|---|---|---|---|---|---|
| Control Untreated | 7.75 (112.6) | 0.63 (9.3) | | 8.13 (120.9) | 8.24 (122.5) | 7.16 (106.5) | 6.77 (100.6) |
| Seed treat 59ml (2 oz)/45 kg 1 cwt V4 0.2351 (½ pt) V9 0.471 (1pt) | 12.15 (180.6) | 0.25 (3.7) | 0.00098 | 11.8 (175.5) | 12.64 (188) | 12.02 (178.7) | 12.45 (185.1) |

Table 5 below illustrates the effect of foliar application of DFU applied at V4 (4th leaf stage of crop growth) at either the rate of 0.584L/ha (1/2 pt/acre) along with the herbicide Round-Up™ herbicides on field corn. Both the control and the treatments also had 0.41 kg (0.9 lb) of ammonium sulfate applied along with the herbicide and di-formylurea (DFU). The field corn was planted in southern Texas on March 3, 2012, at a population density of 35,000 plants per 0.405 hectares (per acre). The weed control was comparable and good with all the treatments. The large difference was in the harvestable yields of the di-formyl urea treated plants over the control which received the herbicide only.

**Table 5**

| Treatment | Yield t/ha (Bu/acre) | SD | T test vs control P =%= % | Yield increase t/ha (bu/acre) vs control | Yield % increase | Yield Rep1 | Yield Rep2 | Yield Rep3 | Yield Rep4 |
|---|---|---|---|---|---|---|---|---|---|
| Control | 14.06 (209) | 0.17 (2.6) | | | | 13.99 (208) | 13.85 (206) | 13.99 (208) | 14.32 (213) |
| V4 di-formylurea DFU 0.584L/ha (½ pt/acre) | 15.47 (230) | 0.34 (5.0) | 0.0013 | 1.95 (29) | 13.9% | 15.27 (227) | 15.6 (232) | 15.06 (224) | 15.94 (237) |
| V4 di-formylurea DFU 1.169L/ha (1 pt/acre) | 17.08 (254) | 0.45 (6.7) | 0.00025 | 3.03 (45) | 21.5% | 16.54 (246) | 16.88 (251) | 17.22 (256) | 17.75 (264) |

## Claims

1. A method for preventing drowning of corn crop plants when flooded by excessive rain by applying diformylurea DFU in an open soil furrow at the time of crop seed sowing; wherein the applying of the DFU to the crop plants flooded by the excessive rain prevents the drowning of the crop plants.

2. The method of claim 1 wherein DFU is sprayed at a dose of 1.169 L/ha (1 pint per acre) to 1.753 L/ha (1 1/2 pints per acre) over the seed and onto the soil of the open furrow before closure of the open furrow.

3. The method of claim 2 wherein pressure is applied to said closed furrow.

## Patentansprüche

1. Verfahren zum Verhindern von Ertrinken von Maisnutzpflanzen, wenn sie durch übermäßigen Regen überflutet werden, durch Aufbringen von Diformylharnstoff (DFU) in einer offenen Erdfurche zur Zeit der Nutzpflanzenaussaat; wobei das Aufbringen des DFU auf die Nutzpflanzen, die durch übermäßigen Regen überflutet werden, das Ertrinken der Nutzpflanzen verhindert.

2. Verfahren nach Anspruch 1, wobei der DFU in einer Dosis von 1,169 l/ha (1 Pinte pro Acre) bis 1,753 l/ha (1,5 Pinte pro Acre) über die Saat und auf die Erde der offenen Furche vor dem Schließen der offenen Furche gesprüht wird.

3. Verfahren nach Anspruch 2, wobei Druck aufgebracht wird, um die Furche zu schließen.

## Revendications

1. Procédé de prévention de la submersion de plants cultivés de maïs lorsqu'ils sont inondés par une pluie excessive en appliquant de la diformylurée DFU dans un sillon de sol ouvert au moment de l'ensemencement du maïs ; dans lequel l'application de la DFU sur les plants cultivés inondés par la pluie excessive empêche la submersion des plants cultivés.

2. Procédé selon la revendication 1, dans lequel la DFU est pulvérisée à une dose de 1,169 L/ha (1 litre par hectare) à 1,753 L/ha (1 litre et demi par hectare) sur la graine et sur le sol du sillon ouvert avant la fermeture du sillon ouvert.

3. Procédé selon la revendication 2, dans lequel une pression est appliquée sur ledit sillon fermé.
